# DEMANDE DE BREVET EUROPEEN

(11) **EP 1 674 164 A1**
(43) Date de publication de la demande: **28.06.2006**
(21) Numéro de dépôt: 05292717.5
(22) Date de dépôt: 13.12.2005
(51) Int. Cl.: B05D 7/22, B29C 63/28, B29C 59/02, F15D 1/06

(54) **Dispositif et procédé de réalisation de surfaces structurées dans des conduites en vue de réduire la traînée aérodynamique**

(30) Priorité: 23.12.2004 FR 0413803
(71) Demandeur: Institut Français du Pétrole, 92852 Rueil Malmaison Cédex (FR)
(72) Inventeur: Duval, Sébastien, 53600 Evron (FR); Charron, Yves, 91310 Longpont-sur-Orge (FR); Gautreau, Nicolas, 78360 Montesson (FR)

(57) **Abrégé**

- L'invention concerne un procédé de réalisation de surfaces structurées à l'intérieur de conduites (1) revêtues intérieurement d'un enduit et dans lesquelles vont circuler des fluides, tels que gaz, hydrocarbures ou eau.
- L'invention consiste à déformer de façon irréversible, en cours de cuisson et/ou séchage, l'enduit appliqué en interne par l'impression, via l'utilisation de moyens expansibles (16), par exemple une baudruche dont la surface externe porte les structurations.

## Description

La présente invention concerne une méthode et un dispositif de réalisation de surfaces structurées à l'intérieur de conduites, de façon à limiter les pertes de charge consécutives à la circulation d'un fluide à l'intérieur de ces conduites.

Les premiers travaux de réduction de traînée par l'utilisation de peinture lisse datent de la moitié du vingtième siècle. Dans le cas des pipelines transportant du gaz, la société de transport du Tennessee a clairement mis en évidence l'apport d'une peinture interne en déterminant des gains de débit de l'ordre de 10% par rapport à une conduite faiblement encrassée, et de 6% par rapport à une conduite dont la paroi est nettoyée.

Depuis la moitié du siècle dernier, l'utilisation d'agent réducteur de traînée permet des gains considérables sur le débit, par exemple de l'ordre de 40 à 50%. Ces agents réducteurs de traînée sont généralement des polymères de grandes masses moléculaires qui ont pour fonction de stabiliser la sous couche turbulente. Aussi bien dans le cas des conduites de gaz, d'eau ou de pétrole, il n'est pas acceptable de polluer le milieu par des molécules de polymère et donc l'utilisation de tels additifs n'est pas envisageable.

Par ailleurs, il est aussi connu que des parois comportant des surfaces structurées permettent des gains substantiels sur le débit. L'effet de réduction de traînée est en général attribué à un contrôle des structures turbulentes dans la couche laminaire et sous-couche turbulente.

Cependant, les applications des surfaces structurées sont relativement peu nombreuses. La plus célèbre est l'utilisation de films collés sur le bateau Star and Stripes lors de l'America's Cup. De nouvelles applications voient le jour pour les combinaisons des nageurs (US-5380578) pour lesquelles une réduction de traînée a été observée.

En effet, il a été démontré des réductions de facteurs de friction jusqu'à 10%, c'est-à-dire environ 5% sur le débit.

Ces réductions de traînée ont de nombreux avantages dans le domaine du transport de fluide :
- réduction possible du nombre de stations de compression, ou de leur puissance, voire utilisation de conduites de plus petit diamètre (baisse des investissements) ;
- réduction de la consommation d'énergie (réduction des coûts de fonctionnement) et donc baisse des émissions de CO2.

Il existe différentes méthodes de réalisation de surface structurées.

Le brevet US-6190594 expose la méthode de réalisation de surfaces structurées par le passage d'un film de polymère dans des laminoirs. La même technologie est décrite dans le brevet US-6676869 pour réaliser une opération d'impression sur un substrat.

Le brevet WO-98/08677 décrit une méthode de réalisation de surfaces structurées sur des films comportant une face adhésive. Cette invention permet de positionner et de pouvoir changer le film structuré le cas échéant. Cependant, ces technologies ne sont pas applicables au cas des conduites de transport de gaz, d'huile, et même d'eau, car la tenue dans le temps de ces films n'est pas garantie et tout remplacement est inenvisageable pour des raisons économiques évidentes. De plus, l'éventualité d'un décollement entraîne le risque d'une augmentation très importante des pertes de charges. De plus, les conduites peuvent être soumises à des variations importantes de pression, ce qui a pour effet de décoller les films. Egalement, les conduites sont soumises au passage de racleur, ou furet instrumentés pour détecter la corrosion, qui risquerait d'arracher le film.

Il apparaît donc que les films autocollants ne peuvent pas être installés dans les conduites de transport de fluides pour une, ou plusieurs, des raisons suivantes :
- inertie chimique et physique des films vis-à-vis des fluides ;
- maintien de l'adhésion dans le temps ;
- difficulté d'application sans défaut, tout défaut d'application faisant perdre l'avantage des surfaces structurées en générant une rugosité macroscopique.

On connaît également le document FR-2836649 qui décrit une méthode de moletage à l'intérieur d'une conduite revêtue d'un enduit ou d'une peinture. Cependant, cette technique nécessite un appareillage spécifique.

La présente invention concerne un procédé de réalisation de surfaces structurées sur la paroi interne d'une conduite revêtue d'un enduit en cours de cuisson et/ou séchage, dans lequel on dispose à l'intérieur de la conduite des moyens expansibles comportant sur leur surface externe des structurations, on dilate les moyens expansibles de façon à imprimer lesdites structurations sur la paroi interne enduite, on finalise la cuisson et/ou le séchage de l'enduit ainsi déformé de façon irréversible.

Les moyens expansibles peuvent comprendre une baudruche, les structurations étant, soit directement réalisées sur l'enveloppe de ladite baudruche, soit sur un film placé sur la baudruche.

Les moyens expansibles peuvent comprendre une pièce en anneau de façon à presser la surface externe des moyens expansibles sur l'enduit, et on peut déplacer longitudinalement ladite pièce sur la longueur du tube.

Les moyens expansibles peuvent comprendre une baudruche ayant au moins une double enveloppe, la première enveloppe étant pressurisée lors de son introduction dans le tube, la deuxième comportant sur sa surface externe les structurations étant mise en pression à partir d'une de ses extrémités pour obtenir l'application régulière à partir de cette extrémité.

On peut diminuer l'espace annulaire de la deuxième enveloppe en utilisant une enveloppe de baudruche intermédiaire qui est pressurisée après la mise en place dans le tube et avant la pressurisation de ladite deuxième enveloppe.

Les moyens expansibles peuvent comprendre une baudruche à paroi à épaisseur croissante entre les deux extrémités, et la mise en contact pour l'impression peut être obtenue à la suite d'une augmentation de pression interne en fonction du temps.

Les moyens expansibles peuvent comprendre une baudruche à paroi à épaisseur constante et comportant une zone de déformation préférentielle qui est en premier mise en contact pour l'impression, à la suite d'une augmentation de pression interne en fonction du temps. Leur forme peut être un bi cônes assemblés par leurs bases.

Les moyens expansibles peuvent comprendre un ensemble de baudruches disposées longitudinalement selon l'axe du tube, et on peut pressuriser successivement lesdites baudruches les unes après les autres.

Une baudruche ne peut être dégonflée qu'après le gonflage de sa voisine suivante.

L'invention concerne également un dispositif de réalisation de surfaces structurées sur la paroi interne d'une conduite revêtue d'un enduit en cours de cuisson et/ou séchage, qui comprend des moyens expansibles comportant sur leur surface externe des structurations et des moyens d'expansion desdits moyens expansibles de façon à imprimer lesdites structurations sur la paroi interne enduite.

La présente invention sera mieux comprise et ses avantages apparaîtront plus clairement à la lecture de la description suivante d'exemples de réalisation, nullement limitatifs, illustrés par les figures ci-après annexées, parmi lesquelles :
- la figure 1 montre schématiquement une réalisation du dispositif selon l'invention,
- la figure 2 montre une variante du dispositif selon l'invention,
- la figure 3 décrit une seconde variante,
- les figures 4 et 5 décrivent d'autres variantes.

Le principe de l'invention consiste à déformer de façon irréversible une peinture, en cours de cuisson et/ou séchage, projetée en interne de la paroi d'une conduite pour créer une surface structurée, via l'utilisation d'une baudruche, ou plus généralement de moyens expansibles introduits dans la conduite. Les structures d'impression sont, soit directement réalisées sur la peau externe de ladite baudruche, soit sur un film qui est rendu solidaire de la baudruche, par exemple par collage.

Le matériau du film doit pouvoir se déformer de façon élastique et ne pas adhérer à la peinture. Les matériaux de type thermoplastiques élastomères fluorés, les silicones conviennent parfaitement. Dans le cas de film collé sur la baudruche, les formes à imprimer doivent avoir des dimensions qui tiennent compte des déformations engendrées par le gonflage de la baudruche.

La baudruche peut être réalisée dans n'importe quel élastomère, tel que le caoutchouc.

Les surfaces structurées sur film peuvent être réalisées soit :
- par passage d'un feuil de polymère dans un laminoir comme décrit dans le brevet WO 98/08677, l'un des cylindres ayant des surfaces structurées ;
- par gravure mécanique ou optique d'un feuil de polymère, tel que laser, moletage,...

L'avantage de la présente invention est qu'elle permet d'imprimer des structures sur un feuil de polymère dont l'inertie chimique a été éprouvée par l'utilisateur des conduites. Il suffit d'imprimer sur une peinture qualifiée pour l'application.

L'utilisation d'une baudruche permet d'accommoder les déformations du pipe qui peuvent être de l'ordre du millimètre alors que les dessins à réaliser sont de l'ordre de 10 à 100 µm.

La baudruche pénétrant dans le pipe lors de l'application en usine permet l'obtention d'une surface structurée sur toute la surface du pipe en quelques instants contrairement aux autres méthodes qui nécessitent une étape d'usinage plus longue et donc beaucoup plus coûteuse.

Dans le cas particulier des conduites de gaz ou d'huile, l'inertie chimique nécessitée par l'opération sur plusieurs décades restreint considérablement le choix des polymères. Très peu de polymères sont qualifiés pour de telles applications : il s'agit principalement de polymère à base d'époxyde, époxy phénolique ou bien époxy novolaque réticulé par des amines ou polyamines.

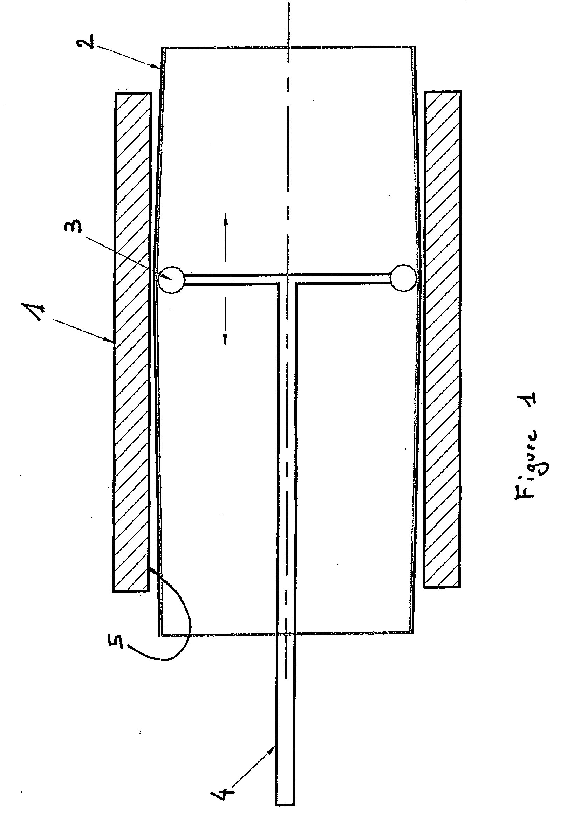

La figure 1 montre un dispositif d'impression des surfaces structurées sur la surface interne 5 d'un élément tubulaire 1, ladite surface ayant été recouverte d'une couche de peinture dans un état tel que sa déformation par empreinte est possible.

Les moyens d'impression comprennent une baudruche 2, c'est-à-dire un volume cylindrique dont l'enveloppe est déformable. L'enveloppe cylindrique comporte les surfaces structurées. Une fois mise en place dans le tube 1, la baudruche 2 subit une expansion de manière à ce que son enveloppe s'applique sur la couche de peinture pour obtenir les surfaces structurées. La figure 1 montre schématiquement des moyens d'expansion 3 portés par un arbre 4 dont le déplacement longitudinal selon l'axe principal du tube permet l'application de la paroi de la baudruche sur toute la longueur du tube. Les moyens d'expansion 3 peuvent être un ensemble élastique de forme torique de façon à pouvoir appliquer une pression la plus régulière possible sur une circonférence interne de la conduite. Cet ensemble peut être une chambre en anneau, pressurisée, ou en matériau souple, qui est déplacée par glissement le long de la surface interne de la baudruche. On peut aussi envisager un ensemble de coussins, ou roues, répartis sur une circonférence et comprenant des moyens d'application radiale d'une force de pression sur la baudruche, soit mécaniques, soit pneumatiques. Ces moyens ne sont pas détaillés ici car à la portée d'un homme du métier.

Une fois expansés, les moyens d'expansion sont déplacés sur toute la longueur du tube.

La baudruche 2 a donc une longueur correspondante à la longueur de l'élément tubulaire. Sa mise en place dans le tube impose que son diamètre externe soit sensiblement inférieur au diamètre interne du tube une fois revêtu de la peinture. Pour fournir, ou compléter la rigidité de la baudruche, celle-ci peut être étanche et pressurisée.

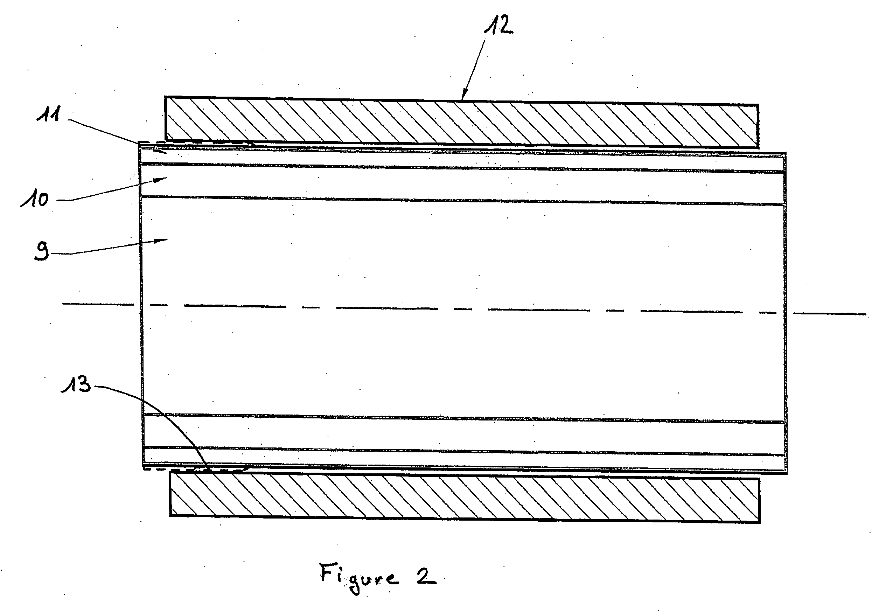

La figure 2 illustre une réalisation de l'invention dans laquelle la baudruche est constituée d'au moins deux couches formant deux enveloppes, la première 9 étant contenue dans la seconde 11. La surface externe de l'enveloppe 11 porte les surfaces structurées permettant de former les empreintes sur la surface interne du tube 12.

La pressurisation de la baudruche 9 permet son introduction dans le tube, la seconde enveloppe 11 étant rétractée sur la première baudruche pour ne pas frotter par contact la couche de peinture. Une fois en place, la seconde baudruche 11 est pressurisée pour être appliquée sur la paroi du tube. Pour que l'application soit régulière, le jeu entre les doubles enveloppes est choisi suffisamment faible pour que lors de la mise en pression par une des extrémités, la zone de contact se déplace longitudinalement, comme représenté sur la zone référencée 13. Cette condition permet notamment d'éviter de piéger des bulles d'air pendant l'impression.

Pour faciliter l'introduction du dispositif dans le tube, une troisième enveloppe 10 peut être intercalée entre la baudruche externe 11 et la baudruche interne 9. Cette troisième enveloppe n'est pressurisée qu'après introduction de l'ensemble des baudruches dans le tube. Ainsi, le dispositif peut présenter un diamètre extérieur plus faible, ce qui facilite sa mise en place dans des tubes de grande longueur. Une fois l'enveloppe intermédiaire pressurisée, l'augmentation du diamètre permet à la baudruche externe de jouer correctement son rôle, ce qui impose une variation de diamètre, ou expansion, de faible ampleur.

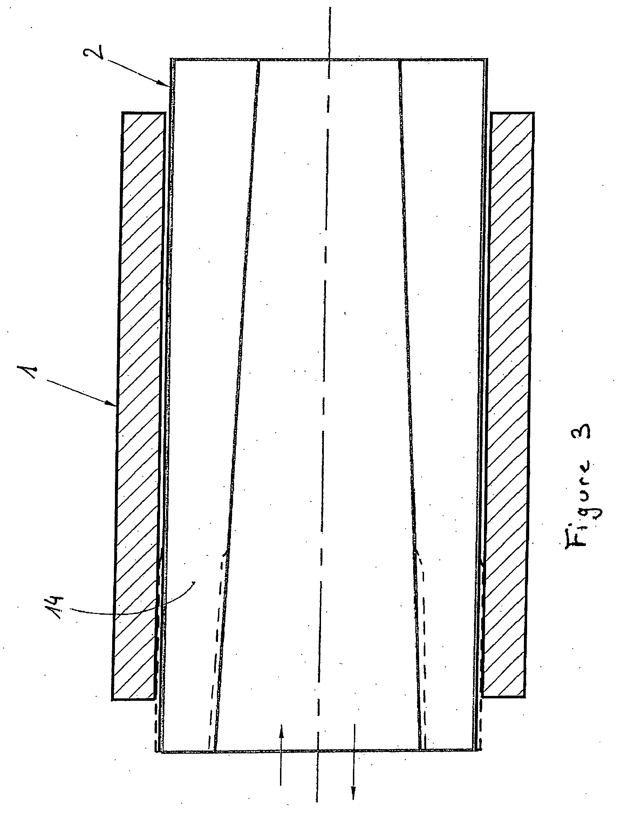

La figure 3 montre une autre variante du dispositif d'impression de surfaces structurées, dans laquelle la baudruche est à paroi 14 d'épaisseur croissante entre les deux extrémités. Comme précédemment la surface externe de l'enveloppe de la baudruche porte les surfaces structurées, soit directement imprimées, soit par le collage de films portant les surfaces structurées.

Une fois la baudruche introduite dans le tube, la pression interne à la baudruche est augmentée en fonction du temps. Ainsi, lorsque la pression de déformation correspondant à l'épaisseur de la paroi est atteinte, la surface externe entre en contact avec la surface enduite du tube. Comme l'épaisseur de la paroi est croissante régulièrement d'une extrémité à l'autre du dispositif, en fonction du temps, le contact se fait lui aussi régulièrement d'une extrémité vers l'autre extrémité du tube.

Une fois imprimée, la baudruche est dépressurisée, éventuellement mise sous vide, pour décoller la surface de la paroi du tube.

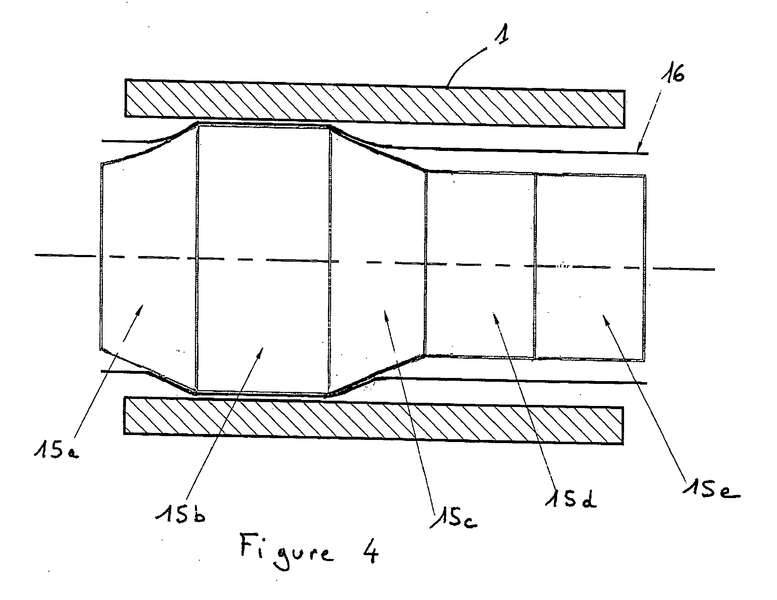

La figure 4 montre un autre mode de réalisation dans lequel le dispositif est constitué par un assemblage longitudinal de plusieurs baudruches 15a, 15b, 15c, 15d, 15e, formant des moyens d'expansion d'une enveloppe tubulaire 16 comportant les surfaces structurées.

Comme cela est représenté sur la figure 4, le gonflement d'une baudruche 15b applique le film 16 sur une longueur correspondante à la largeur de la baudruche. Lorsque le temps d'application a été atteint, la baudruche voisine 15c est gonflée, avant le dégonflage de la baudruche 15b. Le processus se poursuit pour une application complète de la surface du film 16, tout en conservant toujours au moins une baudruche gonflée. Ainsi, l'application de la pression contact est plus facilement contrôlée grâce au volume plus faible et indépendant entre chaque baudruche.

Selon cette variante, on peut garder un certain temps l'ensemble des baudruches en pression, ou gonfler puis dégonfler les baudruches successivement, les unes après les autres.

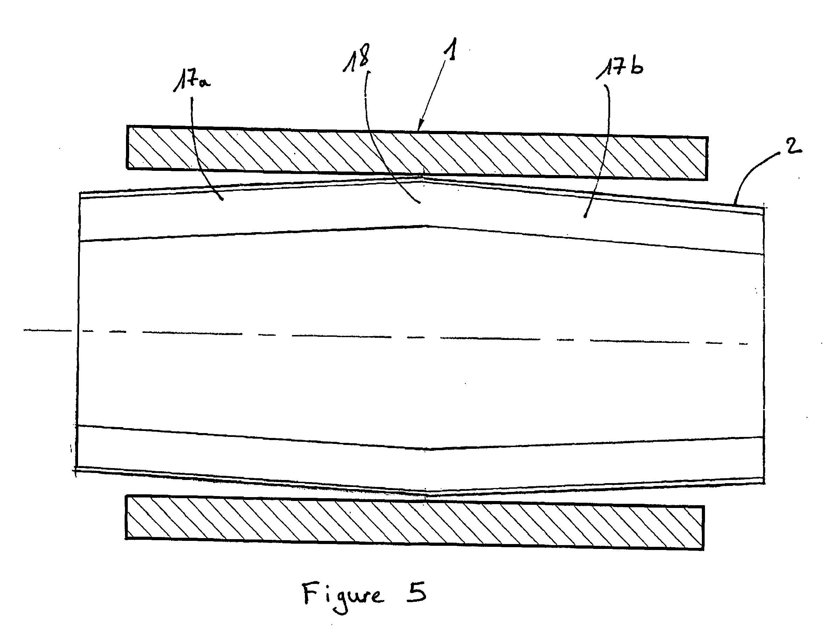

La figure 5 décrit une variante dans laquelle la baudruche est à paroi d'épaisseur constante portant sur sa surface extérieure les surfaces structurées 2. Dans cette variante, la baudruche a une géométrie en deux cônes 17a et 17b dont les bases sont jointives pour former une zone 18 de gonflement préférentiel. Ainsi, à la mise en pression, le premier contact des surfaces structurées 2 se fait au droit de la zone 18, avec un angle qui est fonction notamment de l'angle des cônes.

## Revendications

1. Procédé de réalisation de surfaces structurées sur la paroi interne d'une conduite (1, 12) revêtue d'un enduit en cours de cuisson et/ou séchage, **caractérisé en ce que** l'on dispose à l'intérieur de ladite conduite des moyens expansibles comportant sur leur surface externe (2, 16) des structurations, on dilate lesdits moyens expansibles de façon à imprimer lesdites structurations sur la paroi interne enduite, on finalise la cuisson et/ou le séchage de l'enduit ainsi déformé de façon irréversible.

2. Procédé selon la revendication 1, dans lequel les moyens expansibles comprennent une baudruche, les structurations étant, soit directement réalisées sur l'enveloppe de ladite baudruche, soit sur un film placé sur la baudruche.

3. Procédé selon l'une des revendications 1 ou 2, dans lequel les moyens expansibles comprennent une pièce en anneau de façon à presser la surface externe des moyens expansibles sur l'enduit, et dans lequel on déplace longitudinalement ladite pièce sur la longueur du tube.

4. Procédé selon l'une des revendications 1 ou 2, dans lequel les moyens expansibles comprennent une baudruche à au moins double enveloppe, la première enveloppe étant pressurisée lors de son introduction dans le tube, la deuxième comportant sur sa surface externe les structurations étant mise en pression à partir d'une de ses extrémités pour obtenir l'application régulière à partir de cette extrémité.

5. Procédé selon la revendication 4, dans lequel on diminue l'espace annulaire de la deuxième enveloppe en utilisant une enveloppe de baudruche intermédiaire qui est pressurisée après la mise en place dans le tube et avant la pressurisation de ladite deuxième enveloppe.

6. Procédé selon l'une des revendications 1 ou 2, dans lequel les moyens expansibles comprennent une baudruche à paroi à épaisseur croissante entre les deux extrémités, et dans lequel la mise en contact pour l'impression est obtenue à la suite d'une augmentation de pression interne en fonction du temps.

7. Procédé selon l'une des revendications 1 ou 2, dans lequel les moyens expansibles comprennent une baudruche à paroi à épaisseur constante et comportant une zone de déformation préférentielle qui est en premier mise en contact pour l'impression, à la suite d'une augmentation de pression interne en fonction du temps.

8. Procédé selon l'une des revendications 1 ou 2, dans lequel les moyens expansibles comprennent un ensemble de baudruches disposées longitudinalement selon l'axe du tube, et dans lequel on pressurise successivement lesdites baudruches les unes après les autres.

9. Procédé selon la revendication 8, dans lequel une baudruche n'est dégonflée qu'après le gonflage de sa voisine suivante.

10. Dispositif de réalisation de surfaces structurées sur la paroi interne d'une conduite revêtue d'un enduit en cours de cuisson et/ou séchage, **caractérisé en ce qu'**il comprend des moyens expansibles comportant sur leur surface externe des structurations et des moyens d'expansion desdits moyens expansibles de façon à imprimer lesdites structurations sur la paroi interne enduite.

11. Dispositif selon la revendication 10, dans lequel les moyens expansibles comprennent une baudruche, les structurations étant, soit directement réalisées sur l'enveloppe de ladite baudruche, soit sur un film placé sur la baudruche.

12. Dispositif selon l'une des revendications 10 ou 11, dans lequel les moyens expansibles comprennent une pièce élastique en anneau de façon à presser la surface externe des moyens expansibles sur l'enduit, et des moyens de déplacement longitudinal de ladite pièce sur la longueur du tube.

13. Dispositif selon l'une des revendications 10 ou 11, dans lequel les moyens expansibles comprennent une baudruche comprenant au moins une double enveloppe, la première enveloppe étant adaptée à être pressurisée pour son introduction dans le tube, la deuxième comportant sur sa surface externe les structurations ayant un espace annulaire faible avec la première enveloppe, et adaptée à être mise en pression à partir d'une de ses extrémités pour obtenir l'impression régulière à partir ce cette extrémité.

14. Dispositif selon la revendication 13, dans lequel une enveloppe de baudruche intermédiaire entre la première et la seconde est adaptée à être pressurisée après la mise en place dans le tube et avant la pressurisation de ladite deuxième enveloppe, de façon à réduire l'espace annulaire de la seconde enveloppe.

15. Dispositif selon l'une des revendications 10 ou 11, dans lequel les moyens expansibles comprennent une baudruche à paroi à épaisseur croissante entre les deux extrémités, et est adaptée à être pressurisée selon une augmentation de pression interne en fonction du temps.

16. Dispositif selon l'une des revendications 10 ou 11, dans lequel les moyens expansibles comprennent un ensemble de baudruches disposées longitudinalement selon l'axe du tube et interne à une enveloppe portant les structurations, et adaptées à être successivement pressurisées.

17. Dispositif selon l'une des revendications 10 ou 11, dans lequel les moyens expansibles comprennent une baudruche à paroi à épaisseur constante, et dont la forme est un bi cônes assemblés par leurs bases.
